(19) Europäisches Patentamt

European Patent Office

Office européen des brevets

(11) **EP 0 952 501 B1**

(12) **EUROPÄISCHE PATENTSCHRIFT**

(45) Veröffentlichungstag und Bekanntmachung des Hinweises auf die Patenterteilung:
**26.11.2003 Patentblatt 2003/48**

(51) Int Cl.⁷: **G05B 13/02**

(21) Anmeldenummer: **99107829.6**

(22) Anmeldetag: **20.04.1999**

(54) **Verfahren zur datengetriebenen Prozessführung und Prozessoptimierung von technischen Vorgängen**

Method for data-driven guidance and optimisation of technical processes

Procédé de conduite et d'optimisation de processus commandé par données

(84) Benannte Vertragsstaaten:
**AT BE DE NL SE**

(30) Priorität: **20.04.1998 DE 19817600**
**20.04.1998 DE 19817601**

(43) Veröffentlichungstag der Anmeldung:
**27.10.1999 Patentblatt 1999/43**

(73) Patentinhaber: **SIEMENS AKTIENGESELLSCHAFT**
**80333 München (DE)**

(72) Erfinder:
 • **Furumoto, Herbert Dr.**
 **91052 Erlangen (DE)**
 • **Hollatz, Jürgen, Dr.**
 **81479 München (DE)**
 • **Runkler, Thomas, Dr.**
 **81925 München (DE)**

(56) Entgegenhaltungen:
**DE-A- 19 518 804**

**Beschreibung**

Die Erfindung bezieht sich auf ein Verfahren zur datengetriebenen Prozeßführung und Prozeßoptimierung von technischen Vorgängen, wobei Prozeßdaten erfaßt und daraus geeignete Arbeitspunkte für die Prozeßführung abgeleitet werden.

Komplexe Produktionsprozesse werden durch eine Vielzahl von Prozeßgrößen beschrieben. Bekannte Datenerfassungssysteme, wie z.B. MIMS (Millwide Information Management System), werden immer leistungsfähiger und sammeln GIGA-Bytes von Daten. Diese Datenflut muß eingedämmt werden, indem die Prozeßdaten intelligent und technologisch sinnvoll reduziert oder komprimiert werden.

Ein Verfahren, bei dem eine Ableitung von Prozeßkenngrößen durch Datenreduktion (d.h. Weglassung von Daten) erfolgt, ist z.B. aus der DE 195 18 804 bekannt.

Verfahren zur Datenkompression sind grundsätzlich z.B. aus der Monographie von J.C.Bezdek "Pattern Recognition with Fuzzy Objective Function Algorithms" (Plenum Press New York & London (1961)), insbesondere Kap. S11 bekannt. Weitere Veröffentlichungen zum Stand der Technik, auf die jeweils direkt verwiesen wird, sind am Schluß der Beschreibung als Literaturliste aufgeführt.

Aufgabe der Erfindung ist es, ausgehend von einem Verfahren gemäß Oberbegriff des Anspruchs 1, eine geeignete Auswahl von sicheren und stabilen Arbeitspunkten für die Prozeßführung gewährleisten zu können.

Die Aufgabe ist erfindungsgemäß dadurch lösbar, dass bei der Datenbereitstellung eine Fall- und/oder Dimensionskompression durchgeführt wird, bei der ein einzelner Datensatz als Matrix geschrieben wird mit den Daten eines Falls als Matrixzeilen und der Messgröße als Matrixspalte, und dass bei der so erhaltenden Matrix die Höhe, also die Anzahl der Fälle, und/oder die Breite, also die Anzahl der verwendeten Messgrößen, reduziert werden und die Datenkompression zur Bestimmung der Arbeitspunkte dient. Mit einer solchen Datenkompression wird die Auswahl optimaler Arbeitspunkte vereinfacht. Vorteilhafte Ausgestaltungen der Erfindung sind jeweils Gegenstand der Unteransprüche.

Im Rahmen der Erfindung können nunmehr sichere und stabile Arbeitspunkte als Ergebnis der Kompression entstehen. Rauschen, Zufälligkeiten und Meßfehler werden beseitigt. Diese Arbeitspunkte können betriebswirtschaftlich bewertet werden und unter vorgegebenen Randbedingungen kann der beste Arbeitspunkt ausgewählt werden. Die Modellierung mit den komprimierten Arbeitspunkten liefert geeignete Modelle. Außerdem gestattet die Kompression ein Speichern der Dateninformation von längeren Prozeßlaufzeiten, so daß eine zuverlässige Modellierung möglich wird.

Zur Realisierung der Erfindung werden folgende, für sich gesehen bekannte Ansätze zur Datenkompression unterschieden:

A) Fall- und Dimensionskompression: Ein Datensatz läßt sich als eine Matrix schreiben, dessen Zeilen jeweils den Daten eines Falles entsprechen. Jede Meßgröße entspricht daher einer Spalte in der Datenmatrix. Zur Kompression der Daten läßt sich einerseits die Höhe der Matrix, also die Anzahl der Fälle, reduzieren, andererseits aber auch die Breite der Matrix, also die Anzahl der verwendeten Meßgrößen. Im ersten Fall spricht man von einer Fallkompression, im zweiten Fall von einer Dimensionskompression.

B) Offline-, Batch- und Online-Methoden: Die Offline-Kompression erhält als Eingangsgrößen einen gesamten Satz von Daten und berechnet daraus einen komprimierten Datensatz. Bei den Batchmethoden wird über einen gewissen Zeitraum der Strom der Fälle gesammelt und in einen Datensatz gespeichert. Dieser Datensatz wird anschließend mit Offline-Methoden komprimiert. Reine Online-Methoden erhalten jeweils einen einzelnen Fall und geben daraufhin keinen oder einen Fall aus.

C) Kompression als Vorverarbeitung und zur Modellierung: Wenn zu viele Fälle aufgenommen wurden, um eine effiziente Modellbildung durchführen zu können, ist es sinnvoll, vor der Modellierung die Anzahl der Fälle durch eine Kompression, d.h. eine Vorverarbeitung zu reduzieren. Andererseits werden bei einer hohen Kompressionsrate besonders typische Fälle bestimmt, die ihrerseits bereits als Modell interpretiert werden können (sog. "Case Based Learning"). Methodisch unterscheiden sich die beiden Ansätze kaum.

D) Reale und künstliche Fälle: Die vom Komprimierungsverfahren erzeugten Fälle können real sein, also tatsächliche Fälle, die im Originaldatensatz vorkommen, oder künstlich, also z.B. Mittelwerte aus mehreren sehr ähnlichen Fällen. Reale Fälle haben den Vorteil, daß sie erprobte Anlagenzustände enthalten. Bei "gutmütigen" Prozessen ist jedoch auch eine Interpolation von Anlagenzuständen gefahrlos möglich.

Weitere Einzelheiten und Vorteile der Erfindung ergeben sich aus der nachfolgenden Figurenbeschreibung von einzelnen Beispielen anhand der Zeichnung in Verbindung mit den Patentansprüchen. Es zeigen die Tabelle am Ende der Beschreibung eine Darstellung zur Verdeutlichung der unterschiedlichen Kompressionsmethoden sowie die

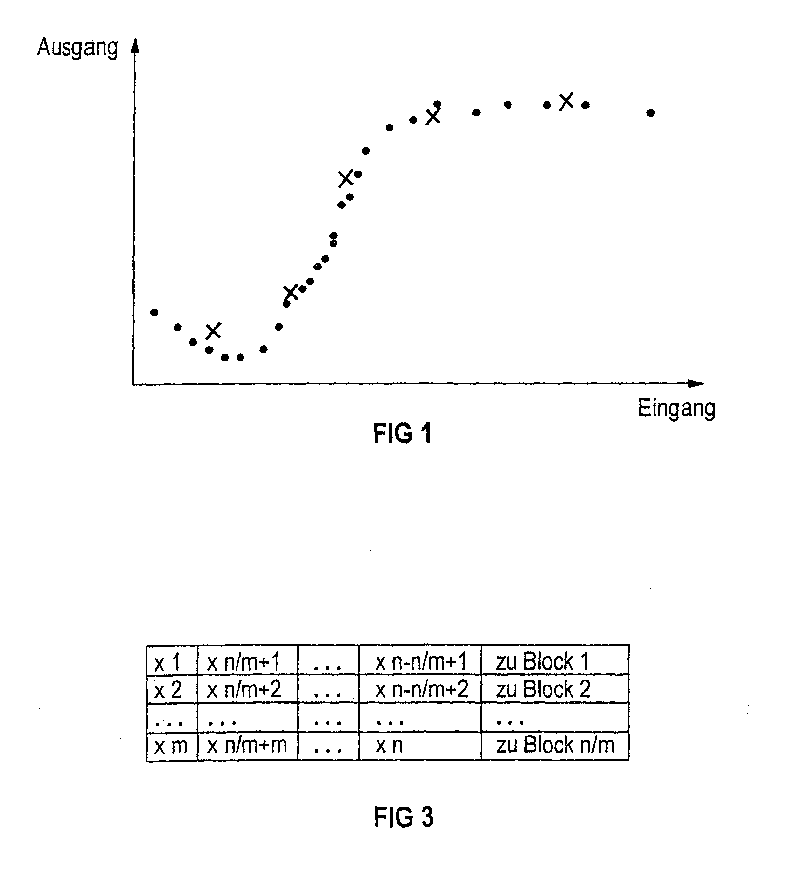

Figur 1    eine Darstellung von Ergebnissen, die mit der FCM-Methode erzielt wurden,

| Figur 2 | einen Datensatz zur Anwendung bei der Methode gemäß Figur, der in Blöcke vorgegebener Größe zerlegt wurde, |
| Figur 3 | die schematische Darstellung einer verschränkten Auswahl von Daten, |
| Figur 4 | einen Datensatz mit einer Auswahl der Daten als Alternative zu Figur 2, |
| Figur 5 | eine Darstellung eines sogenannten RBF-Netzes, |
| Figur 6 | die mit dem Verfahren gemäß Figur 5 erzielten Ergebnisse, |
| Figur 7 | eine Verdeutlichung der Methode der Entscheidungsbäume, |
| Figur 8 | Histogramme der mit dem Verfahren gemäß Figur 5 erzielten Regressionsflächen, |
| Figur 9 | Darstellung eines selbstorganisierenden KohonenNetzes, sowie |
| Figur 10 | die Verwendung der sogenannten regulären Cluster im Ausgangsraum. |

Die Tabelle kann die Leistungsfähigkeit der einzelnen im Rahmen vorliegender Untersuchungen betrachteten Methoden in der entsprechenden Darstellung verdeutlichen: Aufgetragen sind in den Spalten entsprechend den einleitend erläuterten Unterteilungen die Fall- und Dimensionskompression (A), Online-, Batch- und Offline-Methoden (B), die Vorverarbeitungs- und Modellierungsmethoden (C) und die realen und künstlichen Fälle (D). Die acht Zeilen der Tabelle beinhalten jeweils die nachfolgend gemäß den Punkten 1 bis 8 im einzelnen erläuterten Methoden. Die sinnvollen Kombinationsmöglichkeiten sind angekreuzt.

Zur Datenkompression werden im einzelnen folgende Methoden untersucht:

1.a) Fuzzy c-means (FCM):

Fuzzy c-means [Bezdek] ist ein bewährtes und effizientes Clusterverfahren, das aus einem Datensatz $X=\{x_1,...,x_n\}$ eine vorher festgelegte Anzahl $c$ von Clusterzentren $v_i$ und die Zugehörigkeiten $u_{ik}$ der Daten zu diesen Zentren bestimmt. Dazu wird die gewichtete Summe der quadratischen Abstände zwischen Daten und Clusterzentren minimiert. Die Kostenfunktion lautet also

$$J\left(\{u_{ik}\},\{v_i\},\{x_k\}\right) = \sum_{k=1}^{n} \sum_{i=1}^{c} u_{ik}^{m} D_{ik}^{2} \qquad (1.a1)$$

wobei $D_{ik}$ den Abstand zwischen Datum $x_k$ und $v_i$ bezeichnet. Zur Minimierung von $J$ eignet sich ein alternierendes Optimierungsverfahren. Es werden abwechselnd Clusterzentren

$$v_i = \frac{\sum_{k=1}^{n} u_{ik}^{m} x_k}{\sum_{k=1}^{n} u_{ik}^{m}} \qquad (1.a2)$$

und Zugehörigkeiten

$$u_{ik} = 1 \bigg/ \sum_{j=1}^{c} \left(\frac{D_{ik}}{D_{jk}}\right)^{\frac{2}{m-1}} \qquad (1.a3)$$

berechnet, bis die Änderungen aller Clusterzentren kleiner als ein Grenzwert sind. Die Unschärfe der Cluster läßt sich vom Benutzer durch den Exponenten $m$ einstellen. Fuzzy c-means kann verwendet werden, um aus einem Satz von Fällen eine bestimmte Anzahl typischer Fälle und darüber hinaus für jeden gemessenen Fall die entsprechenden Zugehörigkeiten zu bestimmen.

Figur 1 zeigt einen durch Punkte dargestellten Datensatz und die mit der vorstehend beschriebenen Methode gefundenen Clusterzentren, die durch Kreuze dargestellt sind. Es ergibt sich eine gute Übereinstimmung.

Die Methode der Fuzzy c-means kann dadurch weiterentwickelt werden, daß aus den Datensätzen bestimmte Blöcke herausgegriffen werden. Ausgehend von einer alternierenden Clusterschätzung wird in jedem Iterationsschritt nur eine Teilmenge des gesamten Datensatzes betrachtet. Damit wird die Datenkompression erheblich beschleunigt und man spricht von sog. "Fast Fuzzy c-means" (FFCM).

1.b) Fast Fuzzy c-means (FCM):

Die sogenannten "Fuzzy c-Means" sind ein Spezialfall der alternierenden Clusterbildung. Mit dem weitergebildeten Verfahren werden die Methoden sowohl der alternierenden Clusterbildung, als auch der "Fuzzy c-Means" wesentlich beschleunigt. Damit werden die Anwendungsmöglichkeiten verbessert und es wird insbesondere ein Einsatz in der industrielle Praxis bei der Prozeßführung und Prozeßoptimierung von technischen Vorgängen verbessert. In diesem Fall werden Prozeßgrößen erfaßt, als Datensatz bereitgestellt und daraus optimale Arbeitspunkte für die Prozeßführung abgeleitet.

Bisher wurden Clusterzentren in Daten mit iterativen Algorithmen bestimmt. Der bekannteste iterative Clusteralgorithmus ist die alternierende Optimierung des Fuzzy c-Means-Modells, nachfolgend FCM-AO genannt. Diese Methode bestimmt aus einem p-dimensionalen reellen Datensatz $X=\{x_1,...,x_n\}$ eine vorher festgelegte Anzahl $c$ von Clusterzentren $v_i$ und die Zugehörigkeiten $u_{ik}$ der Daten zu diesen Zentren. Dazu wird die gewichtete Summe der quadratischen Abstände zwischen Daten und Clusterzentren minimiert.

Wie bereits erwähnt, lautet die Kostenfunktion:

$$J\left(\left\{u_{ik}\right\},\left\{v_i\right\},\left\{x_k\right\}\right)=\sum_{k=1}^{n}\sum_{i=1}^{c}u_{ik}^{m}D_{ik}^{2}, \qquad (1.b1)$$

wobei $D_{ik}$ den Abstand zwischen Datum $x_k$ und $v_i$ bezeichnet. Zur Minimierung von $J$ eignet sich ein alternierendes Optimierungsverfahren. Dazu werden in einem iterativen Prozeß abwechselnd immer wieder alle $c$ Clusterzentren

$$v_i = \frac{\sum_{k=1}^{n}u_{ik}^{m}x_k}{\sum_{k=1}^{n}u_{ik}^{m}} \qquad (1.b2)$$

und alle $c.n$ Zugehörigkeiten

$$u_{ik} = 1\left/\sum_{j=1}^{c}\left(\frac{D_{ik}}{D_{jk}}\right)^{\frac{2}{m-1}}\right. \qquad (1.b3)$$

berechnet, bis die Änderungen aller Clusterzentren kleiner als ein Grenzwert sind, oder bis eine Maximalzahl von Iterationen erreicht ist. In jedem Schritt wird dabei jedes Element des gesamten Datensatzes für die Berechnung sowohl der Clusterzentren als auch der Zugehörigkeiten benutzt.

Entsprechend Figur 1 ergeben sich der mit Punkten dargestellte Datensatz und die mit FCM-AO gefundenen Clusterzentren und die eines Spezialfall einer alternierenden Clusterabschätzung.

Das verallgemeinerte Verfahren der alternierenden Clusterschaetzung (Alternating Cluster Estimation = ACE) benutzt das algorithmische Schema der alternierenden Optimierung durch abwechselndes Bestimmen von u und v. Die alternierende Clusterschätzung setzt keinerlei Kostenfunktion J voraus. Statt durch Ableitung der Kostenfunktion werden hier die Gleichungen zur Berechnung von u und v vom Anwender frei gewählt. Einige sinnvolle Kombinationen dieser Gleichungen sind in der Fachliteratur beschrieben.

Der Eigentümlichkeit der vorbeschriebenen Methode zur Datenkompression besteht in der langen Zeit, die für eine Kompression benötigt wird. Zur Kompression von Daten, die beispielsweise an einem Tag in einer Papierfabrik aufgenommen wurden, werden etwa drei Stunden benötigt. Dies ist für den industriellen Einsatz i.allg. zu lang.

Der hohe Zeitaufwand iterativer Clusteralgorithmen, wie z.B. bei FCM-AO, beruht auf der Tatsache, daß zur Berechnung der Zugehörigkeiten und Clusterzentren in jedem Iterationsschritt sämtliche Elemente des Datensatzes berücksichtigt werden. Die hier beschriebene Erfindung betrachtet in jedem Iterationsschritt nur eine Teilmenge des Datensatzes und ist daher deutlich schneller. Diese Methode wird daher "Fast Fuzzy c-Means" (FFCM) genannt.

Zur Auswahl der Teilmengen des Datensatzes sind unterschiedliche Ausführungsbeispiele möglich:

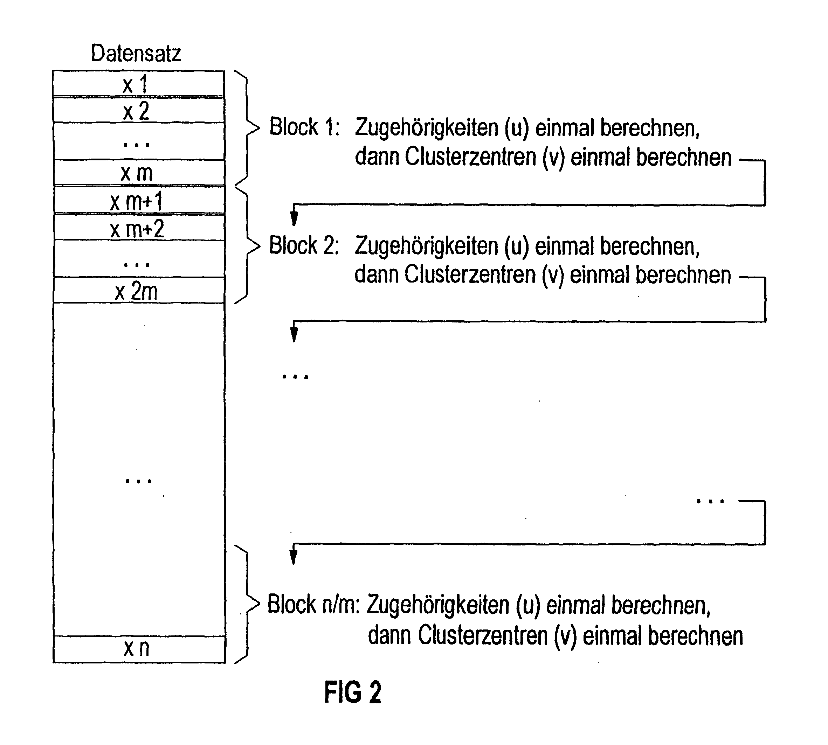

Gemäß Figur 2 wird in n/m aufeinanderfolgende Blöcke der Größe m zerlegt. Angefangen beim ersten Block werden die neuen Zugehörigkeiten u und anschließend die Clusterzentren v einmal berechnet. Dann wird der nächste Block betrachtet und daraus jeweils ein neuer Wert für die Zugehörigkeiten und Clusterzentren bestimmt. Dieser Prozeß wird mit den darauffolgenden Blöcken wiederholt, bis der gesamte Datensatz durchlaufen ist.

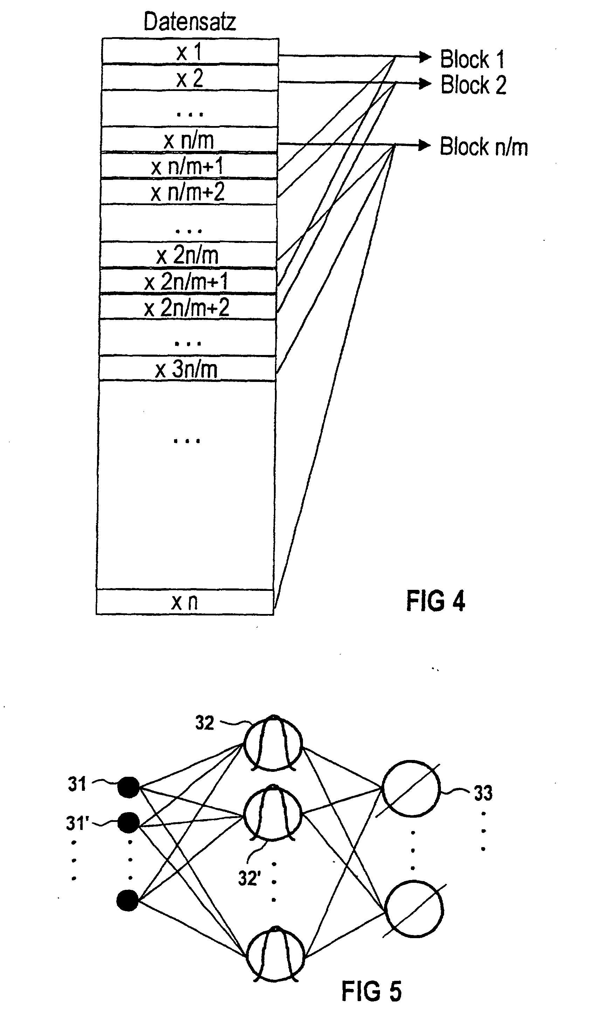

Gemäß Figur 3 und Figur 4 werden nicht die aufeinanderfolgenden Daten zu Blöcken zusammengefaßt, sondern eine verschränkte Auswahl getroffen, so daß jeweils die Daten nach dem Muster gemäß Figur 3 zugeordnet werden.

Bei letzteren Ausführungsbeispielen sind zwei Varianten möglich: Gemäß Figur 3 wird der Datensatz nicht nur einmal, sondern mehrfach durchlaufen. Gemäß Figur 4 werden nicht alle Daten des Datensatzes berücksichtigt, sondern nur eine Teilmenge des Originaldatensatzes ausgewählt. Diese Vorauswahl kann zufällig erfolgen oder mit einer Blockauswahl wie in Figur 2 oder verschränkt wie in Figur 3 bzw. Figur 4 zur Blockstruk-turierung des Datensatzes beschrieben.

Zur Beschreibung der Kompressionsmethoden wird ergänzend auf Literaturveröffentlichungen als Teil der Offenbarung verwiesen, die am Ende der Beschreibung als Liste zusammengestellt sind:

2. Radiale Basisfunktionen (RBF):

Datenkompression kann anhand von neuronalen Netzen mit radialen Basisfunktionen realisiert werden, indem die Zentren der Basisfunktionen als komprimierte Daten betrachtet werden. Bei Netzen mit radialen Basisfunktionen handelt es sich um zweischichtige Netze mit einer Eingabeschicht, einer verdeckten und einer Ausgabeschicht.

Letzteres wird anhand Figur 5 verdeutlicht: Die abstrahierte Darstellung zeigt die Eingänge 31,31',..., die verdeckte Schicht mit den einzelnen Basisfunktionen 32,32'... . Die Ausgänge sind mit 33, 33',... bezeichnet.

Ein Eingabedatum produziert in einem Knoten der versteckten Schicht nur dann einen signifikant von 0 verschiedenen Ausgabewert, wenn es in eine bestimmte Region des Eingaberaums trifft. Obwohl in der Praxis verschiedene Basisfunktionen verwendet werden, wird als Basis meistens eine Gauß'sche Funktion der folgenden Form genutzt:

$$b_i(x) = \kappa \cdot \exp\left[-\sum_{j=1}^{L} \frac{1}{2\sigma_{ij}^2}(x_j - c_{ij})^2\right], i = 1, \ldots, N \qquad (2.1)$$

wobei $b_j(\mathbf{x})$ die Ausgabe des j-ten Knotens in der versteckten Schicht ist, $\kappa_j$ ein positiver, reeller Gewichtungswert der Basisfunktion, $\mathbf{x}$ das L-dimensionale Eingabemuster und $\mathbf{c}_j$ der Gewichtsvektor des j-ten Knotens in der versteckten Schicht bzw. das Zentrum der Gaußschen Funktion ist. $\sigma_j^2$ ist der Normalisierungsparameter des j-ten Knotens bzw. die Weite der Basisfunktion und N ist der Anzahl der Knoten in der versteckten Schicht.

Die Ausgabe lautet als Netzausgabe für einen Knoten y:

$$y = \frac{\sum_j w_j(x)b_j(x)}{\sum_j b_j(x)} \cdot \qquad (2.2)$$

Dies ist ein sehr allgemeines Konzept, da man völlig frei ist, die Form der Basisfunktionen $b_i(\mathbf{x})$ zu spezifizieren. Die Parameter werden über ein Gradientenabstiegsverfahren berechnet (siehe [Moody], [Hollatz]). Die Zentren der Basisfunktionen sind die komprimierten Daten. Die Anzahl der komprimierten Daten wird durch die Anzahl der Basisfunktion festgelegt.

Wahrscheinlichkeitstheoretische Algorithmen:

Datenkompression kann aber auch über die Bestimmung von Wahrscheinlichkeitsdichten vorgenommen werden. Dabei wird die gemeinsame Dichte durch Kombination von einfachen Verteilungen, wie z.B. der Gaußverteilung, berechnet. Die Gaußschen Verteilungen kennzeichnen Cluster, in denen mehrere Daten zusammengefaßt sind. Die Mittelwerte der Gaußverteilungen sind dann wieder die Werte für die komprimierten Daten. Die Wahrscheinlichkeit für ein bestimmtes Datum z ist

$$p(z|\theta) = \sum_{j=1}^{m} p(z|s_j,\theta_j)P(s_j), \qquad (3.1)$$

wobei $\theta=[\theta_l,...,\theta_m]$ den Parametervektor, wie z.B. Mittelwert (komprimiertes Datum) und Streuung, bezeichnet. $s_j$ bezeichnet die j-te Dichte und $P(s_j)$ die a priori- Wahrscheinlichkeit. Das anzustrebende Ziel ist nun den unbekannten Parametervektor $\theta$ aufgrund der durch die gemeinsame Dichte generierten Muster zu schätzen. Angenommen es sei eine Menge $H = \{z^l,...,z^n\}$ von n ungekennzeichneten Mustern gegeben, die von einer gemeinsamen Dichte unabhängig generiert worden sind. Der Parametervektor $\theta$ ist zwar fest, aber unbekannt. Die Wahrscheinlichkeit der beobachteten Muster ist definiert anhand ihrer gemeinsamen Dichte

$$L = p(H|\theta) = \prod_{k=1}^{n} p(z^k|\theta) . \qquad (3.2)$$

Die Maximum-Likelihood-Schätzung $\theta'$ ist der Wert für $\theta$, der L maximiert. Mit dem EM-Algorithmus (Expectation Maximimization) kann eine solche Schätzung angegeben werden. Dabei werden Gaußsche Dichten zugrunde gelegt, deren Parameter mit dem EM-Algorithmus zu bestimmen sind. Statt des EM-Algorithmus kann auch ein Gradientenabstiegsverfahren benutzt werden. Diese Verfahren sind in [Duda, Hart] und [Hollatz] beschrieben.

4. Äquidistante Grids:

Wenn der Wertebereich jeder Meßgröße auf ein festes Intervall begrenzt wird, kann jeder Fall aus dem Datensatz als ein Punkt in einem Hyperwürfel dargestellt werden. Dieser Hyperwürfel läßt sich mit einem regelmäßigen Hypergitter in kleinere Hyperquader aufteilen. Jeder Hyperquader, in den mindestens ein Fall hineinfällt, repräsentiert dann einen typischen Fall.

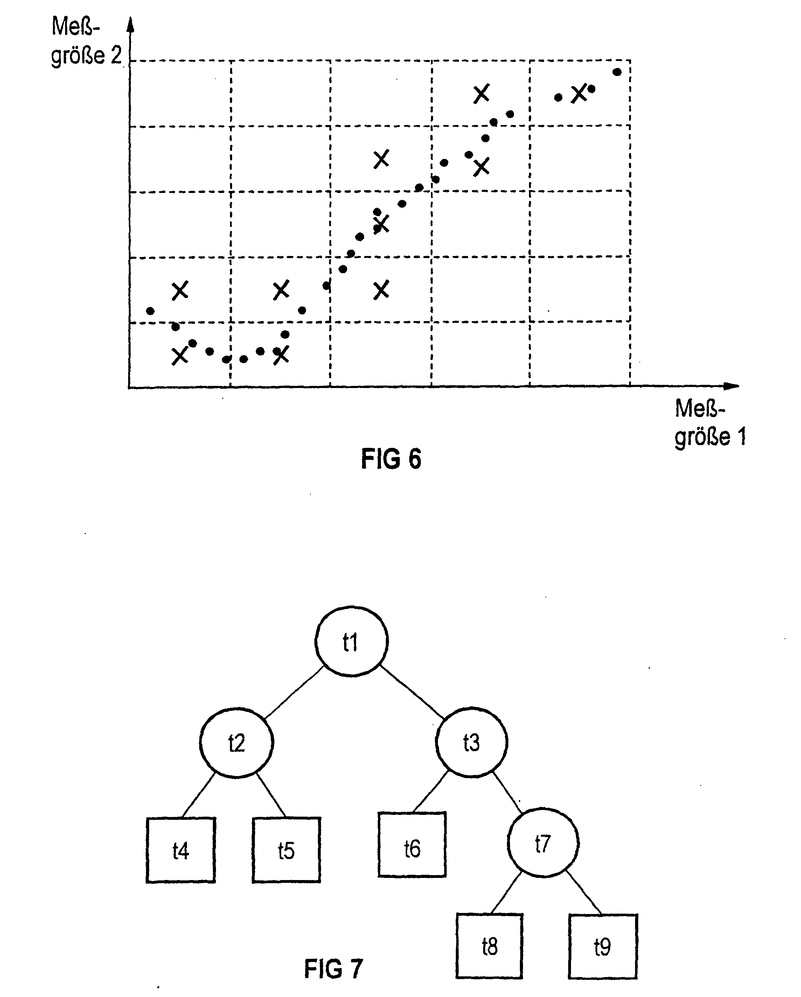

In Figur 6 sind die mit dieser Methode erhaltenen Ergebnisse dargestellt und in der graphischen Darstellung jeweils mit einem Kreuz markiert. Ersichtlich ist, daß je ein Punkt dieser Hyperquader als Arbeitspunkt interpretiert werden kann.

5. Machine-Learning (Entscheidungsbäume):

Auch mit datengenerierten Entscheidungsbäumen können Daten geclustert und damit komprimiert werden. Die Idee eines binären Entscheidungsbaumes liegt im gezielten Abfragen nach Parametergrößen an jedem Knoten des Baumes, so daß Bereiche im Eingaberaum ermittelt werden können, die einerseits so groß sind, um die Problemstruktur ausreichend zu repräsentieren, und andererseits eine genügend große Verallgemeinerungsfähigkeit garantieren. Dieser Bereich und sein zugehöriger Ausgabewert ist durch einen Terminalknoten und die Parameterbegrenzung auf dem zugehörigen Pfad von der Wurzel definiert.

Der Entscheidungsbaum wird generiert durch:

- eine Menge $\wp$ von binären Fragen der Form { Ist $x \in A$ ? }, mit $A \subset \aleph$, ($\aleph$ ist der Eingaberaum; die Fragen, bzw. Teilungen, sind in den Abbildungen als Split bezeichnet), die Güte des Aufteilungkriteriums $\phi(s,t)$, die für jede Aufteilung s und jeden Knoten t berechnet werden kann,
- eine Regel, um den Teilungsprozeß zu beenden, und
- eine Regel, um jedem Knoten einer Klasse zu zuordnen.

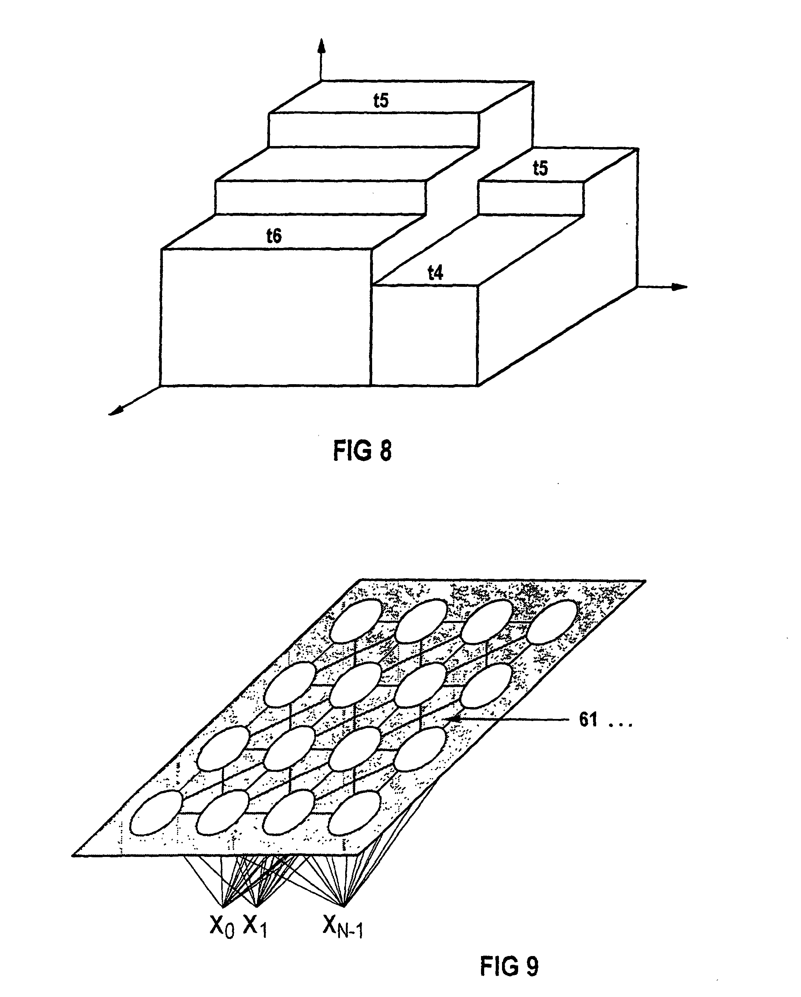

Ein Beispiel eines Entscheidungsbaumes und die entsprechende Regressionsfläche als Histogramm (verändert aus Breiman et al.) ist in den Figuren 7 und 8 wiedergegeben. Im Entscheidungsbaum gemäß Figur 7 sind Entscheidungsknoten t1, t2, t3 und t7 vorhanden, wobei die jeweiligen Ergebnisse mit t4 bis t6 sowie t8 und t9 angegeben sind. Diese Ergebnisse bilden in der dreidimensionalen Darstellung gemäß Figur 8 die Regressionsflächen.

Der Eingaberaum $\aleph$ ist durch eine Reihe von binären Teilungen in Terminalknoten eingeteilt. In jedem Terminalknoten t ist die vorausgesagte Antwort ein konstanter Wert y(t). Da der Prädiktor d(x) über jeden Terminalknoten einen konstanten Wert hat, kann der Baum auch als ein geschätztes Histogramm der Regressionsoberfläche angesehen werden. Ist $\Gamma$ die Lernmenge, so benötigt man zur Bestimmung des Baumprädiktors, wie oben schon erwähnt, erstens, ein Verfahren, um eine Teilung an jedem mittleren Knoten auszuwählen, zweitens, eine Regel, um auszuwählen, wann ein Knoten Terminalknoten wird, und drittens, eine Regel, um jedem Terminalknoten t einen Wert y(t) zuzuweisen. Der Regressionsbaum wird durch iteratives Spalten der Knoten aufgebaut, wobei jedesmal die Abnahme von R(T) maximiert wird. Unterschreitet R(t) einen festgelegten Schwellwert, oder hat die Baumtiefe einen Maximalwert erreicht, so wird der Knoten nicht mehr geteilt, sondern als Terminalknoten ausgezeichnet. Die Terminalknoten repräsentieren jeweils eine Klasse von Daten. Der Mittelwert der Daten die in diese Klasse fallen, sind mit den komprimierten Daten gleichzusetzen. Die Anzahl der komprimierten Daten entspricht der Anzahl von Terminalknoten. Der Algorithmus zur Generierung von Entscheidungsbäumen ist in [Breiman] beschrieben.

6. Kohonen-Algorithmen (z.B. Neural Gas):

Selbstorganisierende topologieerhaltende Karten werden häufig zur Clusteranalyse eingesetzt und können dadurch auch zur Datenkompression benutzt werden. Kohonen's Algorithmus arbeitet mit einem Vektorquantisierungsverfahren, indem die Gewichte zwischen den Eingangsdaten und M Ausgabeknoten, d.h. Cluster, angepaßt werden. Die Ausgabeknoten sind in einer zweidimensionalen Schicht angeordneten und untereinander verbunden.

Letzteres wird anhand Figur 9 verdeutlicht: x0 bis xn-1 bilden die Eingabedaten für ein selbstorganisierendes Kohonen-Netzwerk, das in der Ausgabeschicht 60 die einzelnen Ausgabeeinheiten aufweist.

Ohne eine gewünschte Ausgabe mit einzubeziehen, werden die Eingabedaten beim Training sequentiell abgearbeitet. Nachdem genügend viele Iterationsschritte vollzogen wurden, geben die Gewichte der Karte den Eingaberaum derart wieder, daß sie Clusterzentren darstellen und damit auch die Werte der komprimierten Daten. Die Gewichte werden so im Netz positioniert, daß physisch ähnliche Eingabewerte in räumlich benachbarte Knoten abgebildet werden. Die Anzahl der komprimierten Daten entspricht der Anzahl der Ausgabeneuronen. Der detaillierte Algorithmus ist u.a. in [Kohonen] angegeben.

7. FCM-Modifikation für Cluster mit gleicher Elementzahl:

Eine wünschenswerte Eigenschaft der Kompression ist, daß zu jedem typischen Fall gleich viel Originalfälle gehören. Die Klassendichte soll also der Punktedichte entsprechen. Fuzzy c-means und andere Clusterverfahren bestimmen Cluster, die in etwa die gleiche Größe besitzen, nicht aber die gleiche Anzahl von Punkten. Dies ist jedoch möglich durch eine Modifikation des Clusterverfahrens.

8. Reguläre Fuzzy c-means im Ausgangsraum:

Eine andere wünschenswerte Eigenschaft der Kompression ist, daß die Anzahl typischer Fälle dort besonders hoch ist, wo sich ein bestimmter betrachteter Ausgangswert stark ändert, d.h. wo die Eingangs-Ausgangs-Empfindlichkeit besonders hoch ist. Diese Eigenschaft kann leicht durch eine Modifikation des in [Runkler, Palm] entwickelten regulären Clusterings erreicht werden. Bei dieser Modifikation werden die Zugehörigkeitsfunktionen des Ausgangs a priori festgelegt, und zwar beispielsweise in Form von Dreiecken, deren Grundseite dem doppelten Meßfehler entspricht. Für jeden Punkt werden die Zugehörigkeiten zu den Ausgangsclustern berechnet und die typischen Fälle wie beim Fuzzy c-means durch Center-of-Gravity Defuzzifizierung [Runkler] mit

$$v_i = \frac{\sum_{k=1}^{n} u_{ik}^{m} x_k}{\sum_{k=1}^{n} u_{ik}^{m}} \qquad (8.1)$$

bestimmt.

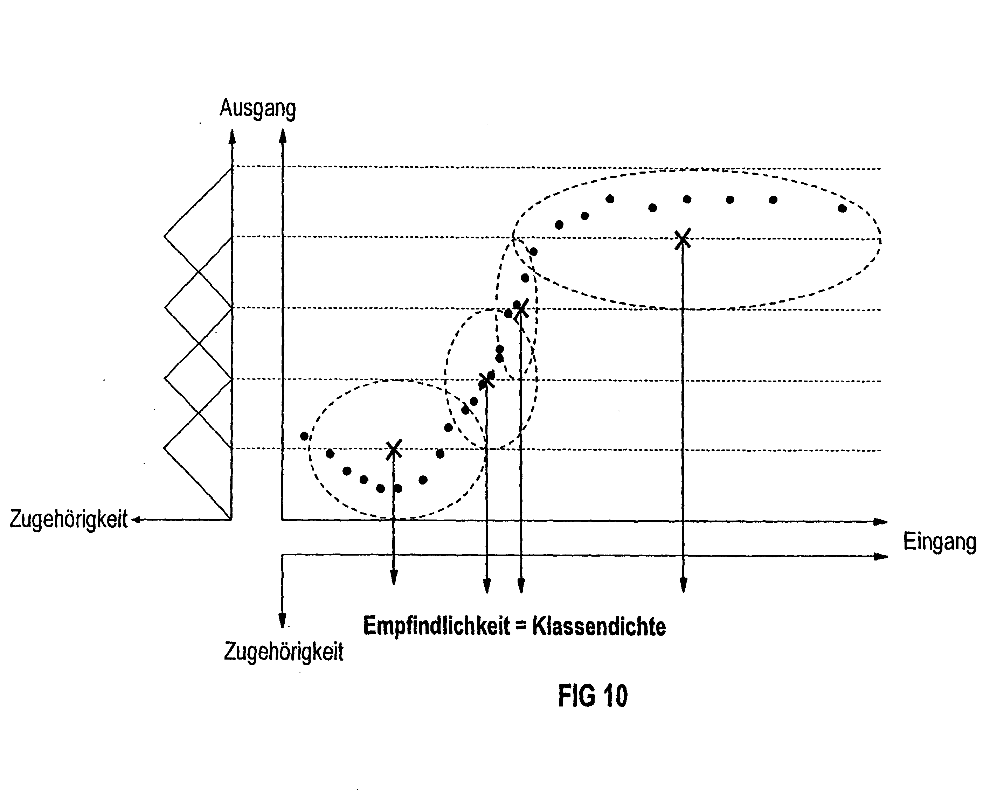

Letzteres wird durch Figur 10 verdeutlicht: Auf der Abszisse sind in der kombinierten Darstellung die Eingänge bzw. die Zugehörigkeit aufgetragen, auf der Ordinate die Ausgänge bzw. die Zugehörigkeit. Bei den regulären Clustern im Ausgangsraum entspricht die Klassendichte der Empfindlichkeit.

Bei der Beschreibung der unterschiedlichen Kompressionsmethoden wurde auf Literaturveröffentlichungen verwiesen, die nachfolgend als Liste zusammengestellt sind:

Literaturliste:

- Bezdek, J., Pattern Recognition with Fuzzy Objective Function Algorithms. Plenum Press, New York (1981).
- Breiman, L., et al., Classification and Regression trees. Wadsworth and Brooks (1981).
- Duda, R.O., Hart, P.E., Pattern Classification and Scene Analysis. John Wiley and Sons, New York (1973).
- Hollatz, J., Integration von regelbasiertem Wissen in neuronale Netze. Dissertation, TU München (1993).
- Kohonen, T., Self-Organizing Maps. Springer-Verlag, Heidelberg (1995).
- Moody, J., Darken, C., Fast Learning in Networks of Locally-Tuned Processing Units. Neural Computation, Vol. 1 (1989) 281-294.
- Runkler, T., Palm, R., Identification of Nonlinear Systems Using Regular Fuzzy c-Elliptotype Clustering. IEEE International Conference on Fuzzy Systems, New Orleans (1996) 1026-1030.
- Runkler, T., Selection of Appropriate Defuzzification Methods Using Application Specific Properties. IEEE Transactions on Fuzzy Systems 5:1 (1997) 72-79.4

|   |   | A | | B | | | C | | D | |
|---|---|---|---|---|---|---|---|---|---|---|
|   |   | Fall- -Kompression | Dimensions- | Online- | Batch- Methoden | Offline- | Vorver- arbeitung | Modellie- lierung | reale | *1 künstl. Falle |
| 1 | Fuzzy c-means | x | x | x | x | x | x | | x |
| 2 | rad. Basisfk'nen | x | x | x | x | x | x | | x |
| 3 | Wahrsch Alg. | x | x | x | x | x | x | | x |
| 4 | Äquidistante Grids | x | x | x | | x | x | | x |
| 5 | Machine Learn. | x | x | x | x | x | x | | x |
| 6 | Kohonen-Alg. | x | x | x | x | x | x | | x |
| 7 | Fuzzy Modif. | x | x | x | x | x | x | | x |
| 8 | reg. Fuzzy Means | x | x | x | x | x | x | | x |

*1 Bei Verfahren, in denen Mittelwerte benutzt werden, können Mittelwerte durch den Median ersetzt werden, so daß reale Werte in den komprimierten Daten abgespeichert werden.

**Patentansprüche**

1.  Verfahren zur datengetriebenen Prozessführung und Prozessoptimierung von technischen Vorgängen, wobei Prozessgrößen erfasst, als Daten bereitgestellt und daraus geeignete Arbeitspunkte für die Prozessführung abgeleitet werden, **dadurch gekennzeichnet, dass** bei der Datenbereitstellung eine Fall- und/oder Dimensionskompression durchgeführt wird, bei der ein einzelner Datensatz als Matrix geschrieben wird mit den Daten eines Falls als Matrixzeilen und der Messgröße als Matrixspalte, und dass bei der so erhaltenden Matrix die Höhe, also die Anzahl der Fälle, und/oder die Breite, also die Anzahl der verwendeten Messgrößen, reduziert werden und die Datenkompression zur Bestimmung der Arbeitspunkte dient.

2.  Verfahren nach Anspruch 1, **dadurch gekennzeichnet, dass** eine sogenannte Offline-Kompression durchgeführt wird, bei der als Eingangsgrößen ein gesamter Satz von Daten erhalten wird und daraus ein komprimierter Datensatz bestimmt wird.

3.  Verfahren nach Anspruch 1, **dadurch gekennzeichnet, dass** eine Batch-Methode durchgeführt wird, bei dem über einen vorgegebenen Zeitraum die Fälle gesammelt und in einem Datensatz gespeichert werden, der anschließend mit Offline-Methoden komprimiert wird.

4.  Verfahren nach Anspruch 1, **dadurch gekennzeichnet, dass** eine Online-Methode durchgeführt wird, bei der jeder einzelne Fall geprüft und entweder keiner oder ein Fall ausgegeben wird.

5.  Verfahren nach einem der Ansprüche 2 bis 4, **dadurch gekennzeichnet, dass** bei einer hohen Kompressionsrate typische Fälle bestimmt werden, die als Modell interpretiert werden.

6.  Verfahren nach Anspruch 1, **dadurch gekennzeichnet, dass** neben realen Fällen auch künstliche Fälle, beispielsweise als Mittelwerte aus mehreren ähnlichen Fällen, generiert werden.

7.  Verfahren nach einem der vorhergehenden Ansprüche, **dadurch gekennzeichnet, dass** zur Datenkompression die Methode der "Alternierenden Clusterschätzung" (ACE) angewandt wird.

8.  Verfahren nach einem der Ansprüche 1 bis 7, **dadurch gekennzeichnet, dass** "Fuzzy-c-means" (FCM) eingesetzt werden.

9.  Verfahren nach Anspruch 7 oder Anspruch 8, **dadurch gekennzeichnet, dass** zur Auswahl einer Teilmenge ein Datensatz in n/m aufeinanderfolgende Blöcke der Größe m zerlegt, dass angefangen vom ersten Block die Zugehörigkeiten (u) und anschließend die Clusterzentren (v) ein- oder mehrmals berechnet und aus dem nächsten Block jeweils ein neuer Wert für die Zugehörigkeiten (u) und Clusterzentren (v) bestimmt wird.

10. Verfahren nach Anspruch 9, **dadurch gekennzeichnet, dass** der Prozess an allen folgenden Blöcken wiederholt wird, bis der gesamte Datensatz durchlaufen ist.

11. Verfahren nach Anspruch 9 oder Anspruch 10, **dadurch gekennzeichnet, dass** eine verschränkte Auswahl von Daten zu Blöcken zusammengefasst wird.

12. Verfahren nach Anspruch 11, **dadurch gekennzeichnet, dass** jeder Datensatz mehrfach durchlaufen wird.

13. Verfahren nach einem der Ansprüche 9 bis 12, **dadurch gekennzeichnet, dass** jeweils nur eine Teilmenge des ursprünglichen Datensatzes ausgewählt wird.

14. Verfahren nach einem der Ansprüche 9 bis 13, **dadurch gekennzeichnet, dass** die Auswahl des Datensatzes zufällig bzw. statistisch erfolgt.

15. Verfahren nach Anspruch 9, **dadurch gekennzeichnet, dass** eine Auswahl nach aufeinanderfolgenden Blöcken erfolgt.

16. Verfahren nach Anspruch 9, **dadurch gekennzeichnet, dass** eine verschränkte Auswahl zur Blockstrukturierung des Datensatzes erfolgt.

**17.** Verfahren nach einem der Ansprüche 1 bis 6, **dadurch gekennzeichnet, dass** die Methode der radialen Basisfunktionen (RBF) angewandt wird.

**18.** Verfahren nach einem der Ansprüche 1 bis 6, **dadurch gekennzeichnet, dass** wahrscheinlichkeitstheoretische Algorithmen eingesetzt werden.

**19.** Verfahren nach einem der Ansprüche 1 bis 6, **dadurch gekennzeichnet, dass** sogenannte "äquidistante Grids" eingesetzt werden.

**20.** Verfahren nach einem der Ansprüche 1 bis 6, **dadurch gekennzeichnet, dass** sogenanntes resultierende "Machine-Learning" eingesetzt wird, wobei Entscheidungsbäume verwendet werden.

**21.** Verfahren nach einem der Ansprüche 1 bis 6, **dadurch gekennzeichnet, dass** Kohonen-Algorithmen eingesetzt werden.

**22.** Verfahren nach einem der Ansprüche 1 bis 6, **dadurch gekennzeichnet, dass** eine FCM-Modifikation für Cluster mit gleicher Elementzahl realisiert wird.

**23.** Verfahren nach einem der Ansprüche 1 bis 6, **dadurch gekennzeichnet, dass** reguläre "Fuzzy-c-means" im Ausgangsraum verwendet werden.


**Claims**

**1.** Method for data-driven process control and optimisation of technical processes, in which process values are recorded and edited as data, and suitable operating points for the process control are derived from this, **characterized in that** when the data is edited a case and/or dimension compression is executed, in which a single data record is described as a matrix with the data of a case as matrix rows and the measured quantity as a matrix column, and that in the resulting matrix the height, being the number of cases, and/or the width, being the number of measured quantities, are reduced and the data compression is used for determining the operating points.

**2.** Method according to Claim 1, **characterized in that** a so-called offline compression is executed, in which an entire record of data is received as input values and a compressed data record is determined from this.

**3.** Method according to Claim 1, **characterized in that** a batch method is executed, in which the cases are collected over a preset period and stored in a data record, which is subsequently compressed using offline methods.

**4.** Method according to Claim 1,**characterized in that** an online method is executed, in which each single case is checked and either no case or one case is output.

**5.** Method according to one of Claims 2 to 4, **characterized in that** at a high compression rate typical cases are determined, which are interpreted as a model.

**6.** Method according to Claim 1, **characterized in that** as well as real cases, artificial cases such as mean values from several similar cases are also generated.

**7.** Method according to one of the preceding claims, **characterized in that** the method of Alternating Cluster Estimation (ACE) is applied for data compression.

**8.** Method according to one of Claims 1 to 7, **characterized in that** "fuzzy c-means" (FCM) are used.

**9.** Method according to Claim 7 or Claim 8, **characterized in that** for selection of a subset a data record is broken down into n/m successive blocks of size m, that starting from the first block the memberships (u) and then the cluster centres (v) are calculated once or several times and from the next block a new value for the memberships (u) and cluster centres (v) is determined in each case.

**10.** Method according to Claim 9, **characterized in that** the process is repeated on all subsequent blocks until the entire data record is processed.

**11.** Method according to Claim 9 or Claim 10, **characterized in that** a restricted selection of data is combined in blocks.

**12.** Method according to Claim 11, **characterized in that** each data record is processed several times.

**13.** Method according to one of Claims 9 to 12, **characterized in that** each time only a subset of the original data record is selected.

**14.** Method according to one of Claims 9 to 13, **characterized in that** the data record is selected randomly or statistically.

**15.** Method according to Claim 9, **characterized in that** a selection is made according to successive blocks.

**16.** Method according to Claim 9, **characterized in that** a restricted selection is made for the block structuring of the data record.

**17.** Method according to one of Claims 1 to 6, **characterized in that** the method of Radial Basis Functions (RBF) is applied.

**18.** Method according to one of Claims 1 to 6, **characterized in that** probability algorithms are used.

**19.** Method according to one of Claims 1 to 6, **characterized in that** so-called "equidistant grids" are used.

**20.** Method according to one of Claims 1 to 6, **characterized in that** so-called resulting "machine learning" is applied, using decision trees.

**21.** Method according to one of Claims 1 to 6, **characterized in that** Kohonen algorithms are used.

**22.** Method according to one of Claims 1 to 6,
**characterized in that** an FCM modification for clusters with the same number of elements is implemented.

**23.** Method according to one of Claims 1 to 6, **characterized in that** regular "fuzzy c-means" are used in the output space.

**Revendications**

**1.** Procédé de commande et d'optimisation de processus techniques en fonction de données, des grandeurs de processus étant détectées et mises à disposition en tant que données et des points de fonctionnement appropriés étant déduits de ces données pour la commande de processus, **caractérisé par le fait que**, lors de la mise à disposition des données, on effectue une compression de cas et/ou de dimension lors de laquelle un ensemble individuel de données est décrit comme une matrice avec les données d'un cas comme lignes de matrice et avec la grandeur de mesure comme colonne de matrice et que, quant à la matrice ainsi obtenue, on réduit la hauteur, c'est-à-dire le nombre des cas, et/ou la largeur, c'est-à-dire le nombre des grandeurs de mesure utilisées, et on utilise la compression de données pour la détermination des points de fonctionnement.

**2.** Procédé selon la revendication 1, **caractérisé par le fait qu'**on met en oeuvre une compression dite en différé (off line) lors de laquelle on reçoit comme grandeurs d'entrée tout un ensemble de données et on détermine à partir de là un ensemble de données comprimé.

**3.** Procédé selon la revendication 1, **caractérisé par le fait qu'**on met en oeuvre une méthode dite en différé ou en lot (batch) lors de laquelle les cas sont collectés pendant un intervalle de temps prédéterminé et sont mémorisés dans un ensemble de données qui est comprimé ensuite avec des méthodes en différé.

**4.** Procédé selon la revendication 1, **caractérisé par le fait qu'**on met en oeuvre une méthode en ligne (on line) lors de laquelle on teste chaque cas individuel et on donne en sortie soit un cas soit aucun.

**5.** Procédé selon l'une des revendications 2 à 4, **caractérisé par le fait que**, pour un taux de compression élevé, on détermine des cas typiques qui sont interprétés comme modèles.

**6.** Procédé selon la revendication 1, **caractérisé par le fait que**, outre des cas réels, on produit aussi des cas artificiels, par exemple comme valeurs moyennes de plusieurs cas semblables.

**7.** Procédé selon l'une des revendications précédentes, **caractérisé par le fait qu'**on utilise pour la compression de données la méthode de "l'estimation alternée de groupe" (ACE = Alternating Cluster Estimation).

**8.** Procédé selon l'une des revendications 1 à 7, **caractérisé par le fait que** l'on utilise des "moyennes c floues" (FCM = Fuzzy-c-means).

**9.** Procédé selon la revendication 7 ou la revendication 8, **caractérisé par le fait que**, pour la sélection d'un sous-ensemble, on décompose un ensemble de données en n/m blocs successifs de grandeur m, qu'on calcule en commençant par le premier bloc, une ou plusieurs fois, les appartenances (u) puis les centres de groupes (v) et qu'on détermine à partir du prochain bloc à chaque fois une nouvelle valeur pour les appartenances (u) et pour les centres de groupes (v).

**10.** Procédé selon la revendication 9, **caractérisé par le fait qu'**on répète la procédure sur tous les blocs suivants jusqu'à ce que tout l'ensemble de données soit parcouru.

**11.** Procédé selon la revendication 9 ou la revendication 10, **caractérisé par le fait qu'**on réunit une sélection croisée de données en blocs.

**12.** Procédé selon la revendication 11, **caractérisé par le fait qu'**on parcourt plusieurs fois chaque ensemble de données.

**13.** Procédé selon l'une des revendications 9 à 12, **caractérisé par le fait qu'**on sélectionne à chaque fois seulement un sous-ensemble de l'ensemble de données initial.

**14.** Procédé selon l'une des revendications 9 à 13, **caractérisé par le fait qu'**on effectue la sélection de l'ensemble de données de manière aléatoire ou statistique.

**15.** Procédé selon la revendication 9, **caractérisé par le fait qu'**on effectue une sélection selon des blocs successifs.

**16.** Procédé selon la revendication 9, **caractérisé par le fait qu'**on effectue une sélection croisée pour la structuration en blocs de l'ensemble de données.

**17.** Procédé selon l'une des revendications 1 à 6, **caractérisé par le fait qu'**on utilise la méthode des fonctions de base radiales (RBF).

**18.** Procédé selon l'une des revendications 1 à 6, **caractérisé par le fait qu'**on utilise des algorithmes de la théorie des probabilités.

**19.** Procédé selon l'une des revendications 1 à 6, **caractérisé par le fait qu'**on utilise des "grilles équidistantes".

**20.** Procédé selon l'une des revendications 1 à 6, **caractérisé par le fait qu'**on utilise un "apprentissage machine" résultant, des arbres de décision étant utilisés.

**21.** Procédé selon l'une des revendications 1 à 6, **caractérisé par le fait qu'**on utilise des algorithmes de Kohonen.

**22.** Procédé selon l'une des revendications 1 à 6, **caractérisé par le fait qu'**on réalise une modification FCM pour des groupes avec un nombre identique d'éléments.

**23.** Procédé selon l'une des revendications 1 à 6, **caractérisé par le fait qu'**on utilise des "Fuzzy-c-means" régulières dans l'espace de sortie.

FIG 1

| x 1 | x n/m+1 | . . . | x n-n/m+1 | zu Block 1 |
|-----|---------|-------|-----------|------------|
| x 2 | x n/m+2 | . . . | x n-n/m+2 | zu Block 2 |
| . . . | . . . | . . . | . . . | . . . |
| x m | x n/m+m | . . . | x n | zu Block n/m |

FIG 3

Datensatz

| |
|---|
| x 1 |
| x 2 |
| . . . |
| x m |
| x m+1 |
| x m+2 |
| . . . |
| x 2m |
| |
| |
| . . . |
| |
| |
| x n |

Block 1: Zugehörigkeiten (u) einmal berechnen, dann Clusterzentren (v) einmal berechnen —

Block 2: Zugehörigkeiten (u) einmal berechnen, dann Clusterzentren (v) einmal berechnen —

. . .

. . .

Block n/m: Zugehörigkeiten (u) einmal berechnen, dann Clusterzentren (v) einmal berechnen

**FIG 2**

EP 0 952 501 B1

Datensatz

| |
|---|
| x 1 |
| x 2 |
| . . . |
| x n/m |
| x n/m+1 |
| x n/m+2 |
| . . . |
| x 2n/m |
| x 2n/m+1 |
| x 2n/m+2 |
| . . . |
| x 3n/m |
| |
| . . . |
| |
| x n |

Block 1
Block 2
Block n/m

**FIG 4**

32
31
31'
32'
33

**FIG 5**

FIG 6

FIG 7

**FIG 8**

61 . . .

$X_0$ $X_1$   $X_{N-1}$

**FIG 9**

Ausgang

Zugehörigkeit

Zugehörigkeit

Eingang

**Empfindlichkeit = Klassendichte**

**FIG 10**

EP 0 952 501 B1